# EUROPEAN PATENT APPLICATION

(11) **EP 4 723 205 A1**
(43) Date of publication of application: **08.04.2026**
(21) Application number: 24815356.1
(22) Date of filing: 23.05.2024
(51) Int. Cl.: H01M 4/136, H01M 4/58, H01M 4/66, H01M 4/1397

(54) **NEGATIVE ELECTRODE BODY AND METHOD FOR MANUFACTURING NEGATIVE ELECTRODE BODY**

(30) Priority: 26.05.2023 JP 2023087142
(71) Applicant: SHIN-ETSU CHEMICAL CO., LTD., Tokyo 100-0005 (JP)
(72) Inventor: OSAWA, Yusuke, Annaka-shi, Gunma 379-0125 (JP); HIROSE, Takakazu, Annaka-shi, Gunma 379-0125 (JP); TAKAHASHI, Kohta, Annaka-shi, Gunma 379-0125 (JP); FURUYA, Masahiro, Annaka-shi, Gunma 379-0125 (JP)
(74) Representative: Schicker, Silvia
(86) International application number: PCT/JP2024/018978
(87) International publication number: WO 2024/247872

(57) **Abstract**

The present invention is a negative electrode body including a negative electrode including a negative electrode current collector having a roughened surface, a negative electrode active material layer provided on the negative electrode current collector, and an ion-conductive layer having lithium-ion conductivity and disposed on a surface of the negative electrode active material layer, and a solid electrolyte layer disposed contiguous to the ion-conductive layer, in which the negative electrode active material layer comprises negative electrode active material particles having a compound containing lithium, silicon, and oxygen, the negative electrode active material particles are represented by SiOₓ₁Li_{y1}, and a value of "x1" is more than 0.8 and 1.2 or less, and a value of "y1" is 0.5 or more and 3.4 or less. This provides the negative electrode body having the negative electrode capable of significantly increasing capacity while maintaining excellent battery characteristics, and suppressing expansion at full charge.

## Description

### TECHNICAL FIELD

The present invention relates to a negative electrode body and a method for producing a negative electrode body.

### BACKGROUND ART

In recent years, small electronic devices, represented by mobile terminals, have been widely used and urgently required to reduce the size and weight and to increase life. Such market requirements have advanced the development of particularly small and lightweight secondary batteries with higher energy density. These secondary batteries are considered to find application not only for small electronic devices but for large electronic devices, such as, typically, automobiles, as well as power storage systems such as, typically, houses.

Among those, lithium-ion secondary batteries are easy to reduce the size and increase the capacity, and have higher energy density than lead or nickel-cadmium batteries, receiving considerable attention.

The lithium-ion secondary battery described above has a positive electrode, a negative electrode, a separator, and an electrolytic solution. The negative electrode includes a negative electrode active material related to charge-and-discharge reactions.

A negative electrode active material, which is usually made of a carbon-based active material, is required to further improve the battery capacity for recent market requirements. The use of silicon as a negative electrode active material is considered to improve the battery capacity, for silicon has a theoretical capacity (4199 mAh/g) ten times or larger than graphite (372 mAh/g). Such material is thus expected to significantly improve the battery capacity. The development of silicon materials for use as negative electrode active materials includes not only silicon as a simple material but also alloys thereof and compounds thereof, typically such as oxides. The consideration of active material shapes ranges from a coated type, which is standard for a carbon-based active material, to an integrated type in which the materials are directly deposited on a current collector.

The use of silicon as a main material of a negative electrode active material, however, causes expansion and contraction of the negative electrode active material when charging or discharging, thereby making the negative electrode active material easy to break, particularly near a surface layer thereof. In addition, this negative electrode active material produces ionic substances in an interior thereof and is thus easy to break. The breakage of the surface layer of the negative electrode active material creates a new surface, increasing a reaction area of the active material. The new surface then causes the decomposition reaction of the electrolytic solution and is coated with a decomposition product of the electrolytic solution, thereby consuming the electrolytic solution. This makes cycle characteristics easy to reduce.

To improve initial efficiency and cycle characteristics of the battery, various investigations have been made so far on a negative electrode material mainly containing the silicon material and an electrode structure for a lithium-ion secondary battery.

Specifically, for a purpose of obtaining good cycle characteristics and high safety, silicon and amorphous silicon dioxide are simultaneously deposited by using a vapor deposition method (for example, see Patent Document 1). To obtain a high battery capacity and safety, a carbon material (electron-conducting material) is provided on a surface layer of a silicon oxide particle (for example, see Patent Document 2). Furthermore, to improve the cycle characteristics and to obtain high input and output characteristics, an active material containing silicon and oxygen is produced to form an active material layer having a high oxygen ratio near a current collector (for example, see Patent Document 3). To improve the cycle characteristics, oxygen is contained in a silicon active material to form an active material layer so that an average oxygen content is 40 at% or less and so that an oxygen content is larger near a current collector (for example, see Patent Document 4).

To improve the initial charge-and-discharge efficiency, a nano-composite having a Si phase, SiO₂, and a M_{y}O metal oxide is used (for example, see Patent Document 5). To improve the cycle characteristics, SiOₓ (0.8≤x≤1.5 and particle diameter range = 1 µm to 50 µm) and a carbon material are mixed, and the mixture is calcined at a high temperature (for example, see Patent Document 6). To improve the cycle characteristics, a mole ratio of oxygen to silicon in a negative electrode active material is set to 0.1 to 1.2, and the active material is regulated within a range that a difference of maximum value and minimum value in the mole ratio near an interface between the active material and a current collector is 0.4 or less (for example, see Patent Document 7). To improve battery load characteristics, metal oxide containing lithium is used (for example, see Patent Document 8). To improve the cycle characteristics, a hydrophobic layer such as a silane compound is formed on a surface layer of a silicon material (for example, see Patent Document 9). To improve the cycle characteristics, silicon oxide is used, and a graphite coating is formed on a surface layer of the silicon oxide to impart conductivity (for example, see Patent Document 10). In Patent Document 10, regarding a shift value obtained by a RAMAN spectrum corresponding to the graphite coating, broad peaks appear at 1330 cm-1 and 1580 cm-1, and a strength ratio thereof I1330/I1580 is 1.5 < I1330/I1580 < 3. To achieve the high battery capacity and to improve the cycle characteristics, a particle having a silicon fine crystal phase dispersed in silicon dioxide is used (for example, see Patent Document 11). To improve overcharge-overdischarge characteristics, a silicon oxide in which an atomic ratio between silicon and oxygen is regulated to 1:y (0<y<2) is used (for example, see Patent Document 12).

As a lithium-ion secondary battery using silicon oxide, Hitachi Maxell, Ltd. started to ship a prismatic secondary battery for a smartphone that adopted a nano-silicon composite in June, 2010 (for example, see Non Patent Document 1). Silicon oxide proposed by Hohl is a composite material with Si⁰⁺ to Si⁴⁺, which has various oxidation states (see Non Patent Document 2). Kapaklis proposes a disproportionation structure that is to be separated into Si and SiO₂ by applying thermal load to silicon oxide (see Non Patent Document 3). Miyachi et al. pay attention to Si and SiO₂, which contribute to charge-and-discharge, among the silicon oxides having the disproportionation structure (see Non Patent Document 4), and Yamada et al. propose a formula of a reaction between the silicon oxide and Li as follows (see Non Patent Document 5).

2SiO(Si+SiO₂) + 6.85Li⁺ + 6.85e⁻ → 1.4Li_{3.75}Si + 0.4Li₄SiO₄ + 0.2SiO₂

The above reaction formula indicates that Si and SiO₂, constituting silicon oxide, react with Li to be separated into a Li silicide and a Li silicate, and partially unreacted SiO₂.

Here, the generated Li silicate, which is an irreversible component, is considered a stable substance that does not extract Li once formed. A capacity per weight calculated from this reaction formula has a value close to an experimental value, and this reaction formula is recognized as a reaction mechanism of silicon oxide. Kim et al. identify the Li silicate, which is the irreversible component generated with charge-and-discharge of silicon oxide, as Li₄SiO₄ by using ⁷Li-MAS-NMR and ²⁹Si-MAS-NMR (see Non Patent Document 6).

This irreversible capacity is the weakest point of silicon oxide, and improvement is required. Accordingly, Kim et al. produce a negative electrode having remarkably improved initial efficiency as a battery and being practically usable by using a Li pre-doping method to form the Li silicate in advance (see Non Patent Document 7).

There was also a proposed method of treating a powder, not Li-doping the electrode, to achieve the improvement of the irreversible capacity (see Patent Document 13).

The silicon oxide with improved irreversible capacity can replace a large part of the carbon material negative electrode, and thus, the battery capacity can be significantly increased. However, an increase in the silicon oxide in a proportion of the negative electrode raises a risk of ignition in an event of an abnormality in the batteries using a liquid electrolyte, resulting in reduced battery safety.

Accordingly, for a purpose of securing the safety of the battery, various developments have been made in all-solid-state batteries in which a liquid electrolyte is replaced with a solid electrolyte (see Patent Documents 14 to 17).

### CITATION LIST

### PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A
Patent Document 14: JP H11-007942 A
Patent Document 15: JP 2017-033647 A
Patent Document 16: JP 2018-142431 A
Patent Document 17: JP 2022-165490 A
Patent Document 18: JP 2003-059492 A
Patent Document 19: JP 2015-220196 A
Patent Document 20: JP 2017-068929 A
Patent Document 21: JP 2020-068104 A
Patent Document 22: JP 2020-030919 A
Patent Document 23: JP 2021-128857 A

### NON PATENT LITERATURE

Non Patent Document 1: Battery Association of Japan, Newsletter "Denchi (battery)", May 1, 2010, p. 10
Non Patent Literature 2: A. Hohl, T. Wieder, P. A. van Aken, T. E. Weirich, G. Denninger, M. Vidal, S. Oswald, C. Deneke, J. Mayer, and H. Fuess : J. Non-Cryst. Solids, 320, (2003), 255.
Non Patent Literature 3: V. Kapaklis, J. Non-Crystalline Solids, 354 (2008) 612.
Non Patent Literature 4: Mariko Miyachi, Hironori Yamamoto, and Hidemasa Kawai, J. Electrochem. Soc. 2007 volume 154, issue 4, A376-A380
Non Patent Literature 5: M. Yamada, M. Inaba, A. Ueda, K. Matsumoto, T. Iwasaki, T. Ohzuku, J. Electrochem. Soc., 159, A1630 (2012)
Non Patent Literature 6: Taeahn Kim, Sangjin Park, and Seung M. Oh, J. Electrochem. Soc. volume 154, (2007), A1112-A1117.
Non Patent Literature 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.
Non Patent Document 8: Noboru Sato (ed.) "The Latest Development Trends on Lithium-ion Batteries for xEV", CMC Publishing, November 27, 2020, pp. 96-111.

### SUMMARY OF INVENTION

### TECHNICAL PROBLEM

As described above, small electronic devices, represented by mobile terminals, have been advancing recently toward high performance and multifunction, and a lithium-ion secondary battery, which is the main electric source thereof, is required to increase battery capacity. As a method to solve this problem, it is desired to develop a lithium-ion secondary battery having a negative electrode using a silicon material as a main material. Moreover, a lithium-ion secondary battery using silicon material is desired to have initial charge-and-discharge characteristics and cycle characteristics almost equivalent to those of a lithium-ion secondary battery using a carbon-based active material. Thereupon, the cycle characteristics and initial charge-and-discharge characteristics have been improved by using a negative electrode active material that is silicon oxide modified by insertion and partial extraction of Li. In recent years, an irreversible capacity, which is a disadvantage of the silicon oxide, has been reduced by using the silicon oxide as a main material, containing Li in advance to produce Li silicate. Such silicon oxide is actually beginning to be marketed. While Li-SiO-C (Non Patent Document 8), in which Li is incorporated into this silicon oxide, is used to replace a large proportion of a carbon negative electrode material to produce a prototype battery, a significant capacity increase is achieved, but safety is compromised by increasing an additive amount of the silicon oxide.

In response to the compromise of safety, it has been reported that high safety can be realized by employing a solid electrolyte as an electrolyte (Patent Documents 18 to 20). However, when a graphite negative electrode is used, an increase in capacity comparable to that of silicon oxide cannot be expected. Although a lithium negative electrode and a negative electrode made of a silicon-based compound can improve coulombic efficiency, a degradation in cycle characteristics remains a problem due to a conductive pathway breakdown caused by volume expansion (Patent Document 21). Similarly, suppression of the volume expansion in a silicon-based negative electrode results in a decrease in energy density due to the presence of a void layer and a mixing of the solid electrolyte into the negative electrode (Patent Documents 22 and 23).

The present invention has been made in view of the above-described problem. An object of the present invention is to provide a negative electrode body capable of significantly increasing capacity and suppressing expansion during full charge while maintaining excellent battery characteristics, and a method for producing a negative electrode body, which is capable of producing such a negative electrode body.

### SOLUTION TO PROBLEM

To achieve the object, the present invention provides a negative electrode body comprising:
a negative electrode including,
   a negative electrode current collector having a roughened surface,
   a negative electrode active material layer provided on the negative electrode current collector, and
   an ion-conductive layer having lithium-ion conductivity and disposed on a surface of the negative electrode active material layer; and
a solid electrolyte layer disposed contiguous to the ion-conductive layer, wherein
the negative electrode active material layer comprises negative electrode active material particles having a compound containing lithium, silicon, and oxygen,
the negative electrode active material particles are represented by SiOₓ₁Li_{y1}, and
a value of "x1" is more than 0.8 and 1.2 or less, and a value of "y1" is 0.5 or more and 3.4 or less.

The negative electrode body includes the negative electrode active material layer composed of the negative electrode active material particles having the compound containing lithium, silicon, and oxygen, thereby enabling improvement of battery capacity. Moreover, the inventive negative electrode body can make the negative electrode active material layer directly supported on the roughened surface of the negative electrode current collector without a binder, a conductive assistant agent, etc. A region in the electrode that is not involved in charge-and-discharge can be reduced, and excess vacant space can be reduced. As a result, an energy density in the electrode is significantly improved. In addition, the inventive negative electrode body includes a layer having lithium-ion conductivity (ion-conductive layer) on the surface (outermost surface) of the negative electrode active material layer. The solid electrolyte layer is disposed contiguous to the ion-conductive layer. As a result, ionic conductivity between the solid electrolyte and the negative electrode active material is improved compared with that of a conventional negative electrode active material layer using silicon powder or silicon-based compound powder, thereby enabling improvement of battery characteristics. Moreover, the inventive negative electrode body can be a negative electrode body that can suppress expansion thereof when fully charged. Furthermore, the inventive negative electrode body can represent a compositional formula of the negative electrode active material particles by SiOₓ₁Li_{y1}. In addition, by virtue of the value of "x1" being more than 0.8 and 1.2 or less, and the value of "y1" being 0.5 or more and 3.4 or less, excellent battery characteristics can be maintained. Note that in this description of the present invention, a unitary body, in which the negative electrode and the solid electrolyte are integrated, is referred to as the negative electrode body.

In this case, it is possible that the negative electrode active material layer has a multilayer structure composed of two or more layers,
when the negative electrode active material particles are defined as primary particles, the negative electrode active material layer forms secondary particles, which are aggregates of the primary particles,
the secondary particles have a form separated from each other in an in-plane direction,
a thickness T1 of the negative electrode active material layer before charging and a thickness T2 when fully charged satisfy a relation of T2/T1 ≤ 1.4.

In this way, the inventive negative electrode body can have the multilayer structure and be configured such that the negative electrode active material particles form the secondary particles. The negative electrode active material layer having the multilayer structure composed of two or more layers can mitigate expansion and contraction of the negative electrode active material layer. Accordingly, the inventive negative electrode body can suppress changes in thickness before and after charging. When the thickness T1 of the negative electrode active material layer before charging and the thickness T2, when fully charged, satisfy a relation of T2/T1 ≤ 1.4, the expansion and contraction of the active material during charging and discharging are suppressed, and electrical contact is less likely to be disrupted, resulting in enabling excellent battery characteristics to be maintained.

Moreover, it is preferable that the negative electrode active material layer having the multilayer structure comprises an interlayer lithium-ion conductive layer having lithium-ion conductivity disposed in at least one of the interfaces between respective layers constituting the multilayer.

With such a negative electrode body, the ionic conductivity is improved, and then resistance between the negative electrode active material layers can be reduced, thereby improving battery performance.

Moreover, it is preferable that the negative electrode active material layer contains at least one of Li₄SiO₄, Li₂Si₂O₅, Li₂SiO₃, and Li₆Si₂O₇-

By having at least one of these Li silicates, the negative electrode active material layer is in a stable state during charging and discharging, and thus, excellent cycle characteristics can be exhibited.

Moreover, it is preferable that the ion-conductive layer having the lithium-ion conductivity is composed of at least one of Li carbonate, Li phosphate, Li fluoride, Al carbonate, Al phosphate, Al fluoride, a compound having a silyl group, and a carbonized material containing a polycyclic aromatic hydrocarbon.

By providing such an ion-conductive layer, reactions with moisture and oxygen can be suppressed, and material degradation can be suppressed. This enables Li to be readily incorporated, and excellent battery characteristics to be maintained.

Moreover, it is preferable that the secondary particles of the negative electrode active material layer are each composed of, on average, four or more primary particles.

With such a negative electrode body, an electrode collapses due to charge-and-discharge can be more effectively prevented, and a stable negative electrode active material layer can be maintained.

Moreover, in the inventive negative electrode body, the solid electrolyte layer can be composed of a sulfide-based solid electrolyte.

Although a sulfide-based solid electrolyte has a risk that this electrolyte may react with lithium extracted from a silicon-based active material to generate heat, the inventive negative electrode body is provided with the ion-conductive layer on its surface to suppress this reaction. This enables designing a safe battery that is less prone to generating heat while maintaining high ionic conductivity.

At this time, it is possible that the sulfide-based solid electrolyte includes at least one of lithium, indium, sulfur, and phosphorus.

Moreover, it is possible that the sulfide-based solid electrolyte includes at least one of Li₂S, P₂S₅, SiS₂, LiI, LiBr, P₂O₅, Li₃PO₄, and GeS₂.

In the inventive negative electrode body, the above compounds can be suitably used as the sulfide-based solid electrolyte.

Moreover, in the inventive negative electrode body, the solid electrolyte layer can be composed of an oxide-based solid electrolyte.

The oxide-based solid electrolyte is easy to handle stably in air, enabling the design of the safe battery.

In this case, it is possible that the oxide-based solid electrolyte has a perovskite structure.

In this case, it is possible that the oxide-based solid electrolyte includes at least one of lanthanum, lithium, magnesium, tungsten, niobium, and titanium.

Moreover, it is possible that
the oxide-based solid electrolyte is represented by a compositional formula of Aₓ₂BO₃ (0<x2<1),
the element A includes at least one of La and Li, and
the element B includes at least one of Mg, W, Nb, and Ti.

Moreover, it is possible that the oxide-based solid electrolyte includes a NASICON-type phosphate compound.

In this case, it is possible that the solid electrolyte having the NASICON-type phosphate compound includes at least one of lithium, aluminum, germanium, zirconium, titanium, and calcium.

Moreover, it is possible that
the NASICON-type phosphate compound is represented by Li₍₁₊ₓ₃₎M1₍ₓ₃₎M2₍₂₋ₓ₃₎(PO₄)₃,
the element M1 includes at least one selected from the group consisting of Al, Y, Ga, and In,
the element M2 includes at least one selected from the group consisting of Ti, Ge, and Zr, and
"x3" satisfies 0≤x3≤2.

Moreover, it is possible that the oxide-based solid electrolyte has a garnet-type crystal structure.

Moreover, it is possible that the solid electrolyte having the garnet-type crystal structure includes at least one of lithium, lanthanum, calcium, zirconium, bismuth, aluminum, cerium, gallium, boron, and oxygen.

Moreover, it is possible that the solid electrolyte having the garnet-type crystal structure is represented by Li_{(7-3x4+y4-z4)}Mₓ₄La_{(3-y4)}A'_{(y4)}Zr_{(2-z4)}T_{(z4)}O₁₂ (an element M is one or more of Al and Ga; an element A' is one of Ca and Sr; and T is one of Nb and Ta; satisfying 0≤x4≤0.18, 0≤y4≤0.18, and 0≤z4≤1.5).

In the inventive negative electrode body, the above compounds can be suitably used as the oxide-based solid electrolyte.

Moreover, the present invention provides a method for producing a negative electrode body to produce the negative electrode body according to any of the above, the method comprising the steps of:
winding the negative electrode current collector onto a can roll having a curvature;
vapor-depositing a film containing silicon and/or silicon monoxide and having a multilayer structure composed of two or more layers on the negative electrode current collector by the vapor deposition, while conveying the negative electrode current collector on the can roll;
spraying an oxygen-containing gas onto the film containing silicon and/or silicon monoxide to form a multilayer-structured layer containing silicon dioxide on an upper portion of each layer;
forming the negative electrode active material layer by inserting lithium into, and releasing from, the layers having the multilayer structure;
forming the ion-conductive layer having lithium-ion conductivity on a surface of the negative electrode active material layer; and
forming the solid electrolyte layer contiguous to the ion-conductive layer.

According to the inventive method for producing a negative electrode body, the negative electrode body capable of significantly increasing capacity can be produced while maintaining battery characteristics.

In this case, it is preferable that
in the step of forming the layers having the multilayer structure, the layers having the multilayer structure are formed such that each layer contains silicon oxide, including the silicon dioxide therein,
in the step of vapor-depositing, the negative electrode active material layer containing the silicon oxide is grown by vapor deposition on the negative electrode current collector, and
the method comprises the step of immersing the negative electrode active material layer containing the silicon oxide in a lithium-containing solution, and modifying the silicon oxide by an electrochemical method to generate the compound containing lithium, silicon, and oxygen, and to form the ion-conductive layer.

According to such a method for producing a negative electrode body, lithium can be inserted using the electrochemical method; consequently, the negative electrode body capable of significantly increasing capacity can be more reliably produced while maintaining the battery characteristics.

### ADVANTAGEOUS EFFECTS OF INVENTION

As described above, the inventive negative electrode body, when used as a member of a secondary battery, can obtain high initial efficiency, large capacity, and excellent cycle characteristics. In addition, according to the inventive method for producing a negative electrode body, it is possible to produce the negative electrode body that has a large capacity and excellent initial charge-and-discharge characteristics when employed as the negative electrode body configured in the secondary battery, while obtaining excellent cycle characteristics.

### BRIEF DESCRIPTION OF DRAWINGS

[FIG. 1] is a schematic cross-sectional view of a configuration of an example of a negative electrode body according to the present invention.
[FIG. 2] is a schematic exploded view of a configuration example of a lithium-ion secondary battery including a negative electrode body according to the present invention.
[FIG. 3] is a SEM image of a surface of a negative electrode active material layer of an example of a negative electrode body according to the present invention.

### DESCRIPTION OF EMBODIMENTS

As described above, as one method to increase battery capacity of a lithium-ion secondary battery, a negative electrode with silicon oxide as a main material has been studied for use as the negative electrode of the lithium-ion secondary battery. This lithium-ion secondary battery using the silicon oxide is desired to have initial charge-and-discharge characteristics that are close to being equivalent to those of the lithium-ion secondary battery using carbon-based active material. In addition, by using Li-doped SiO, which can improve the initial charge-and-discharge characteristics, a significant increase in capacity can be anticipated, but further capacity improvement is required for an automotive application, or the like.

Thereupon, the present inventors have earnestly studied to obtain the negative electrode that can improve the initial charge-and-discharge characteristics and increase battery capacity while obtaining high cycle characteristics when used as the negative electrode for the secondary battery, and the present invention has been completed.

That is, one aspect of the present invention is a negative electrode body including: a negative electrode including, a negative electrode current collector having a roughened surface, a negative electrode active material layer provided on the negative electrode current collector, and an ion-conductive layer having lithium-ion conductivity and disposed on a surface of the negative electrode active material layer; and a solid electrolyte layer disposed contiguous to the ion-conductive layer, in which the negative electrode active material layer includes negative electrode active material particles having a compound containing lithium, silicon, and oxygen, the negative electrode active material particles are represented by SiOₓ₁Li_{y1}, and a value of "x1" is more than 0.8 and 1.2 or less, and a value of "y1" is 0.5 or more and 3.4 or less. In this way, the inventive negative electrode body includes the negative electrode and the solid electrolyte layer.

Moreover, another aspect of the present invention is a method for producing a negative electrode body to produce the inventive negative electrode body described above, the method including the steps of winding the negative electrode current collector onto a can roll having a curvature, vapor-depositing a film containing silicon and/or silicon monoxide and having a multilayer structure composed of two or more layers on the negative electrode current collector by the vapor deposition, while conveying the negative electrode current collector on the can roll, spraying an oxygen-containing gas onto the film containing silicon and/or silicon monoxide to form a multilayer-structured layer containing silicon dioxide on an upper portion of each layer, forming the negative electrode active material layer by inserting lithium into, and releasing from, the layers having the multilayer structure, forming the ion-conductive layer having lithium-ion conductivity on a surface of the negative electrode active material layer, and forming the solid electrolyte layer contiguous to the ion-conductive layer.

Hereinafter, the present invention will be described in detail. However, the present invention is not limited thereto.

### <Negative Electrode Body>

To begin with, referring to drawings, a configuration of the inventive negative electrode body will be described.

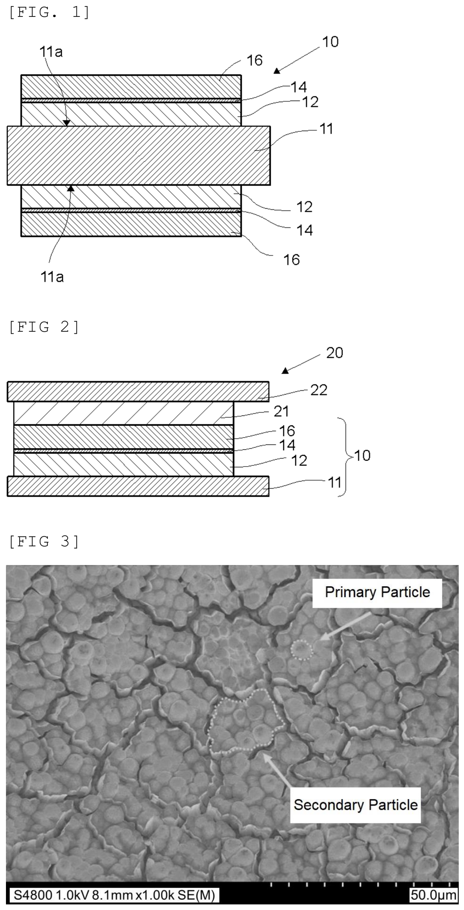

FIG. 1 shows a schematic cross-sectional view of an example of the inventive negative electrode body. As shown in FIG. 1, a negative electrode body 10 is configured to have a negative electrode current collector 11 and negative electrode active material layers 12 provided on surfaces 11a of this negative electrode current collector 11. This negative electrode active material layer 12 may be provided on both surfaces 11a of the negative electrode current collector 11, as shown in FIG. 1, or provided only on one side of the surfaces 11a. Furthermore, the negative electrode body 10 is provided with an ion-conductive layer 14 having lithium-ion conductivity on a surface of the negative electrode active material layer 12. That is, a structure of the negative electrode is provided with the negative electrode current collector 11, the negative electrode active material layer 12, and the ion-conductive layer 14. The negative electrode body 10 is further provided with a solid electrolyte layer 16 disposed contiguous to the ion-conductive layer 14.

The surface 11a of the negative electrode current collector 11 is a roughened surface. That is, the negative electrode active material layer 12 is provided on the roughened surface 11a of the negative electrode current collector 11.

Hereinafter, the negative electrode current collector 11 and the negative electrode active material layer 12 will be described, respectively.

### [Negative Electrode Current Collector]

The negative electrode current collector 11 is made of a highly electrically conductive and mechanically strong material. Examples of the electrically conductive materials usable for the negative electrode current collector 11 include copper (Cu) and nickel (Ni). This electrically conductive material is preferably a material that does not form an intermetallic compound with lithium (Li).

The negative electrode current collector 11 preferably contains carbon (C) and sulfur (S), besides the main element, because these elements improve the physical strength of the negative electrode current collector. In particular, when an active material layer that expands during charging is disposed, the current collector containing the above elements has an effect of suppressing deformation of the electrode, including the current collector. The content of the contained elements described above is not particularly limited, but among them, each of the contents is preferably 100 mass ppm or more. This is because a higher effect of suppressing deformation is obtained. Such an effect of suppressing deformation enables further improvement of the cycle characteristics.

In addition, the surface 11a of the negative electrode current collector 11 needs to be roughened, and preferably, a ten-point mean roughness Rz of the surface is 1.5 µm or more and 5.0 µm or less. With such a negative electrode body 10, including the negative electrode current collector 11 having the surface 11a with such a desirable mean roughness Rz, not only can the negative electrode active material layer 12 be supported more stably but also the density of the negative electrode active material particles in the negative electrode active material layer 12 can be appropriately controlled, thereby enabling more excellent battery characteristics to be exhibited. The roughened negative electrode current collector 11 includes, for example, a metallic foil subjected to an electrolyzing process, an embossing process, or a chemical etching process.

### [Negative Electrode Active Material Layer]

The negative electrode active material layer 12 of the inventive negative electrode body 10 includes the negative electrode active material particles including a compound containing lithium, silicon, and oxygen (silicon compound particles), namely, silicon compound particles containing lithium and oxygen, and the negative electrode active material layer 12 is provided on the negative electrode current collector 11. In a portion of its structure, the negative electrode body 10 can be said to have a structure in which the negative electrode active material particles are directly supported on the roughened surface 11a of the negative electrode current collector 11.

The inventive negative electrode body 10 can improve battery capacity by containing the negative electrode active material particles, which are silicon compound particles. Moreover, unlike general electrodes, the inventive negative electrode body 10 can make the negative electrode active material layer 12 directly supported on the roughened surface 11a of the negative electrode current collector 11 without using a binder, a conductive assistant agent, or the like. In addition, a region in the electrode that does not involve charge-and-discharge can be reduced, and an excess vacant space can be reduced. Consequently, the energy density of the electrode can be significantly improved.

In this way, by using the negative electrode body 10 having the negative electrode active material layer 12 that is closely supported, it is possible to increase the energy density of the battery, which cannot be achieved with a powder electrode, for example.

Moreover, in the negative electrode active material layer 12, the negative electrode active material particles having the compound containing lithium, silicon, and oxygen can be adjacent to one another. The ion-conductive layer 14 having lithium-ion conductivity is formed on the surface of the negative electrode active material layer 12 as described above, and the ion-conductive layer 14 is preferably composed of at least one of Li carbonate, Li phosphate, Li fluoride, Al carbonate, Al phosphate, Al fluoride, a compound having a silyl group, and a carbonized material containing a polycyclic aromatic hydrocarbon. As for the carbonized material, a carbonized material in which a main component is an aromatic compound can be exemplified. In particular, a carbonized material in which a main component is a polycyclic aromatic hydrocarbon is preferred. A coating that serves as the ion-conductive layer 14 described above has a role as a protective layer that protects an interface between the negative electrode active material layer 12 and the solid electrolyte layer 16. By virtue of a presence of such a coating, the inventive negative electrode body 10 can exhibit excellent cycle characteristics.

As for the silyl group of the above compound having a silyl group, the silyl group having an organic group, such as an alkyl group, can be exemplified. In this case, a silyl group having an organic group with 1 to 5 carbon atoms is preferred. More preferably, the silyl group has the alkyl group with 1 to 5 carbon atoms. In this case, the alkyl group is preferably a methyl group, an ethyl group, a propyl group, an isopropyl group, a butyl group, a tert-butyl group, or an isobutyl group. As the silyl group having such an alkyl group, a trialkylsilyl group including a trimethylsilyl group, a triethylsilyl group, or the like is exemplified. In this case, the three alkyl groups may be the same as described above or may be different. Note that the organic group having 1 to 5 carbon atoms may contain an unsaturated bond. Moreover, a fluorine atom may be contained in the alkyl group.

Furthermore, in the inventive negative electrode body 10, the negative electrode active material particles can be represented by SiOₓ₁Li_{y1}, and a value of "x1" is more than 0.8 and 1.2 or less, and a value of "y1" is 0.5 or more and 3.4 or less. When the value of "x1" is more than 0.8, an oxygen ratio becomes higher than that of only silicon, thereby improving the cycle characteristics. More preferably, "x1" is 0.9 or more. When "x1" is 1.2 or less, resistance of the silicon oxide does not become excessively high, which is therefore preferable. Among these, it is preferable that the value of "x1" in SiOₓ₁Li_{y1} is closer to 1, because high cycle characteristics can be obtained. Note that a composition of the silicon compound in the present invention does not necessarily indicate a purity of 100%, and may contain trace amounts of an impurity element. When the value of "y1" is 0.5 or more, an irreversible component of SiO generated during the initial charging and discharging can be fixed in advance, thereby enabling significant improvement of the energy density of the electrode. When the value of "y1" is 3.4 or less, the negative electrode active material particles can be in a stable state with respect to oxygen and moisture, thereby enabling an assembly of a battery with higher capacity.

That is, according to the inventive negative electrode body 10, the capacity can be significantly increased while maintaining the battery characteristics.

On the other hand, when the value of "x1" is 0.8 or less, although the capacity is increased, an area over which Si⁰⁺ reacts with the electrolyte is increased, thereby degrading the cycle characteristics. In addition, the value "x1" of more than 1.2 results in a loading substance, and also degrades the battery characteristics. The value "x1" is preferably as close to 1 as possible.

The negative electrode active material layer 12 of the inventive negative electrode body 10 preferably has a multilayer structure composed of two or more layers. The negative electrode body 10, having the negative electrode active material layer 12 of the multilayer structure, can mitigate expansion and contraction of the negative electrode active material layer 12; therefore, it is more preferable because a capacity retention rate is also increased.

In addition, as described later, when producing the inventive negative electrode body 10, Li is introduced into the negative electrode active material layer 12. In order to introduce Li more smoothly, it is advantageous that the negative electrode active material layer 12 is formed, at the time of forming the negative electrode active material layer 12, to have the multilayer structure composed of two or more layers. The negative electrode active material layer 12, having the multilayer structure composed of two or more layers, can realize smooth insertion of Li while suppressing decomposition of the electrolyte.

When the negative electrode active material layer 12 has the multilayer structure, each layer of the multilayer structure is preferably a layer made of a high-valence silicon compound containing at least one or more of lithium or oxygen on the surface. By having the layer made of the silicon compound on the surface, the expansion and contraction due to charge-and-discharge of the negative electrode active material layer 12 is mitigated, and thus a stable negative electrode active material layer 12 can be maintained.

Moreover, when the above-described negative electrode active material particles are defined as primary particles, the negative electrode active material layer 12 forms secondary particles, which are aggregates of the primary particles. The secondary particles preferably have a form separated from each other in an in-plane direction.

In the inventive method for producing a negative electrode body 10, described later, the negative electrode active material particles originate from the roughened portion of the surfaces 11a of the negative electrode current collector 11 and grow by vapor deposition. When these particles are defined as the primary particles, the primary particles preferably form the secondary particles, which are the aggregates of the primary particles. This can be controlled by changing the roughened state of the surfaces 11a of the negative electrode current collector 11; for example, a wider roughened interval results in smaller secondary particle groups, while a narrower roughened interval and the primary particles filled up too densely result in difficulty in generating the secondary particles with charge-and-discharge.

The secondary particles desirably have a separated form from each other in the in-plane direction. The stable negative electrode active material layer 12 can be maintained by charging and discharging in this state.

By having such a configuration, the inventive negative electrode body 10 can suppress a change in thickness of the negative electrode active material layer 12 due to charge-and-discharge. In particular, a thickness T1 of the negative electrode active material layer 12 before charging and a thickness T2 when fully charged can satisfy a relation of T2/T1 ≤ 1.4. With such a negative electrode body 10, the expansion when fully charged can be suppressed to a state close to that of graphite.

Moreover, in the inventive negative electrode body 10, the secondary particles of the negative electrode active material particles of the negative electrode active material layer 12 are preferably each composed of, on average, four or more primary particles. When this number is 4 or more, a surface area of the negative electrode active material layer becomes an appropriate size; consequently, degradation of the material due to charge-and-discharge of the battery can be suppressed. That is, when this number is 4 or more, the stable battery characteristics can be exhibited while suppressing the degradation of the material. The average number of the primary particles in the secondary particles can be measured by observation using a scanning electron microscope. FIG. 3 shows an SEM image of the surface of the negative electrode active material layer 12 composing the inventive negative electrode body 10.

Moreover, the negative electrode active material layer 12 preferably contains at least one of Li₄SiO₄, Li₂Si₂O₅, Li₂SiO₃, and Li₆Si₂O₇. In addition to Li₂SiO₃, Li silicates such as Li₄SiO₄ and Li₆Si₂O₇ exhibit relatively higher stability compared with other Li compounds; accordingly, a silicon-based active material containing these Li compounds can obtain more stable battery characteristics. These Li compounds can be obtained by selectively converting a portion of SiO₂ component generated within the silicon compound into the Li compound and modifying the silicon compound.

Furthermore, in the inventive negative electrode body 10, when the negative electrode active material layer 12 has the multilayer structure, the multilayer structure preferably has an ion conductive layer (interlayer lithium-ion conductive layer) having the lithium-ion conductivity disposed in at least one of the interfaces between respective layers constituting the multilayer. In this way, due to the presence of the ion-conductive layer (interlayer lithium ion-conductive layer) also within the interlayer of the multilayer structure, lithium readily migrates within the interlayer, allowing the improvement of the battery characteristics.

### [Solid Electrolyte Layer]

The solid electrolyte layer 16 shown in FIG. 1 is contiguous to the ion-conductive layer 14 on an outermost surface of the negative electrode active material.

A solid electrolyte constituting the solid electrolyte layer 16 is preferably composed of any one of a sulfide-based solid electrolyte or an oxide-based solid electrolyte.

### [Sulfide-based Solid Electrolyte]

First, a case in which the solid electrolyte layer 16 is composed of the sulfide-based solid electrolyte will be described. A known sulfide-based solid electrolyte can be used as the sulfide-based solid electrolyte. Although the sulfide-based solid electrolyte has a risk of reacting with lithium extracted from the silicon-based active material and generating heat, in the inventive negative electrode body, the surface of the negative electrode body is provided with the ion-conductive layer, which can suppress this reaction. Consequently, a safe battery that is less prone to generating heat while maintaining high ionic conductivity can be designed.

The sulfide-based solid electrolyte can include at least one of lithium, indium, sulfur, and phosphorus. Moreover, the sulfide-based solid electrolyte can include at least one of Li₂S, P₂S₅, SiS₂, LiI, LiBr, P₂O₅, Li₃PO₄, and GeS₂. Examples of the sulfide-based solid electrolyte can include Li₂S-P₂S₅, Li₂S-SiS₂, LiI-Li₂S-SiS₂, LiI-Si₂S-P₂S₅, Li₂S-P₂S₅-LiI-LiBr, LiI-Li₂S-P₂S₅, LiI-Li₂S-P₂O₅, LiI-Li₃PO₄-P₂S₅, and Li₂S-P₂S₅-GeS₂.

### [Oxide-based Solid Electrolyte]

Next, a case in which the solid electrolyte layer 16 is composed of the oxide-based solid electrolyte will be described. The oxide-based solid electrolyte can be stably handled with ease in the air, enabling the design of the safe battery.

### [Compound having Perovskite Structure]

The oxide-based solid electrolyte usable in the present invention, can have a perovskite structure. The compound having the perovskite structure has a compositional formula represented by a general formula of A_{X2}BO₃ (provided that 0<X2<1 is satisfied). In the compound having the perovskite structure, the element A includes at least one of La and Li, and the element B includes at least one of Mg, W, Nb, and Ti. By including Li in the element A, the Li ion conductivity can be provided. In addition, it is preferable that Mg and W are included in the element B. This perovskite-type ion conductive oxide (solid electrolyte) may be represented by a basic compositional formula of (Li₃ₐ,La_{2/3-a}) (Mg_{b}, W_{1-b})O₃ (provided that 0<a≤1/3, 0.4≤b≤0.6 are satisfied). In this case, a substitution amount "a" of Li is preferably 0.04 or more, more preferably in a range of 0.05 or more and 0.30 or less, and further preferably in a range of 0.07 or more and 0.22 or less. In these ranges, the Li-ion conductivity can be further enhanced, which is preferable. In addition, a content "b" of Mg is preferably in a range of 0.48 or more and 0.52 or less, and the closer the amounts of Mg and W to each other, the more preferable, with 0.5 being more preferable. This perovskite-type ion-conductive oxide is more preferably represented by a basic compositional formula of (Li₃a,La_{2/3-a}) (Mg_{1/2},W_{1/2})O₃ (provided that a is 1/6, 1/4, or 1/3). Although a structure represented by a basic compositional formula of (La_{2/3}) (Mg_{1/2},W_{1/2})O₃ is shown, the perovskite-type ion-conductive oxide of the present disclosure has a structure in which a portion of La is substituted by Li.

### [Phosphate compound having NASICON-type crystal structure]

The oxide-based solid electrolyte usable in the present invention can include a NASICON-type phosphate compound. The phosphate compound having the NASICON-type crystal structure is not particularly limited, as long as it is the NASICON-type phosphate compound, and can include, for example, at least one of lithium, aluminum, germanium, zirconium, titanium, and calcium. In addition, this NASICON-type phosphate compound is preferably a NASICON-type phosphate compound represented by a general formula (1) of Li₁₊ₓ₃M1ₓ₃M2₂₋ₓ₃(PO₄)₃ (in the formula (1), M1 is at least one selected from the group consisting of Al, Y, Ga, and In, M2 is at least one selected from the group consisting of Ti, Ge, and Zr, and "x3" satisfies 0≤x3≤2).

From the metals above, the metal M1 is preferably at least one selected from the group consisting of Al, Y, and Ga, and more preferably Al. Moreover, the metal M2 is preferably at least one selected from the group consisting of Ge and Ti, and more preferably Ge. That is, the NASICON-type phosphate compound (LAGP) represented by a general formula (2) of Li₁₊ₓ₃Alₓ₃Ge₂₋ₓ₃(PO₄)₃ is preferred (in the formula (2), 0≤x3≤2 is satisfied). This preference is attributed to the high ionic conductivity of the compound represented by the formula (2) among the NASICON-type phosphate compounds.

In addition, among the above ranges, the range of "x3" preferably satisfies 0.1≤x3≤1.9, more preferably 0.3≤x3≤0.7. In particular, the solid electrolyte material is preferably Li_{1.5}Al_{0.5}Ge_{1.5}(PO₄)₃ in the above formula.

### [Compound having Garnet-type Crystal Structure]

The oxide-based solid electrolyte usable in the present invention can be a solid electrolyte having a garnet-type crystal structure. The solid electrolyte having the garnet-type crystal structure preferably includes at least one of lithium, lanthanum, calcium, zirconium, bismuth, aluminum, cerium, gallium, boron, and oxygen. The compound having the garnet-type crystal structure is preferably represented by Li_{(7-3x4+y4-z4)}Mₓ₄La_{(3-y4)}A'_{(y4)}Zr_{(2-z4)}T_{(z4)}O₁₂ (an element M is one or more of Al and Ga; an element A' is any of Ca and Sr; and T is any of Nb and Ta; satisfying 0≤x4≤0.18, 0≤y4≤0.18, and 0≤z4≤1.5). In particular, the solid electrolyte having the garnet-type crystal structure is represented by a compositional formula of Li_{7-3x4+α}La₃Zr₂Alₓ₄O_{12-y4}Li₃BO₃ (in the formula, 0≤x4<2, 1.1<(7-3x4+α)/(7-3x4)≤1.5, and 0.3≤y4≤2.0 are satisfied). When the compound having the garnet-type crystal structure has the above composition, the compound forms a cubic crystal at room temperature, thereby enabling to obtaining of an effect to have a high ionic conductance at room temperature. In addition, the compound having the garnet-type crystal structure according to the embodiment of the present invention is represented by a compositional formula of Li_{7-3x4+α}La₃Zr₂Alₓ₄O_{12-y4}Li₃BO₃, in which "α" denotes an excessive amount of Li relative to "Li₇₋₃ₓ₄", which is a stoichiometric of Li; this indicates Li in excess. Furthermore, in the formula, "x4" may satisfy 0≤x4<1. Moreover, "y4", which represents a mole ratio of Li₃BO₃, may satisfy 0.3≤y4≤1.5.

### [Method for Producing Negative Electrode Body]

The inventive method for producing a negative electrode body preferably includes the steps of winding the negative electrode current collector onto a can roll having a curvature, vapor-depositing a film containing silicon and/or silicon monoxide and having a multilayer structure composed of two or more layers on the negative electrode current collector by the vapor deposition, while conveying the negative electrode current collector on the can roll, spraying an oxygen-containing gas onto the film containing silicon and/or silicon monoxide to form a multilayer-structured layer containing silicon dioxide on an upper portion of each layer, forming the negative electrode active material layer by inserting lithium into, and releasing from, the layers having the multilayer structure, forming the ion-conductive layer having lithium-ion conductivity on a surface of the negative electrode active material layer, and forming the solid electrolyte layer contiguous to the ion-conductive layer. According to such an inventive method for producing a negative electrode body, the negative electrode body capable of significantly increasing capacity can be produced while maintaining battery characteristics.

In this case, it is preferable that in the step of forming the layers having the multilayer structure, the layers having the multilayer structure are formed such that each layer contains silicon oxide, including the silicon dioxide therein, in the step of vapor-depositing, the negative electrode active material layer containing the silicon oxide is grown by vapor deposition on the negative electrode current collector, and the production method includes the step of immersing the negative electrode active material layer containing the silicon oxide in a lithium-containing solution, and modifying the silicon oxide by an electrochemical method to generate the compound containing lithium, silicon, and oxygen, and to form the ion-conductive layer. According to such a method for producing a negative electrode body, lithium can be inserted using the electrochemical method; consequently, the negative electrode body capable of significantly increasing capacity can be more reliably produced while maintaining the battery characteristics.

With such an inventive method for producing a negative electrode body, the inventive negative electrode body can be produced. However, the inventive method for producing a negative electrode body is not limited to the inventive production method described here.

Hereinafter, an example of the inventive method for producing a negative electrode body is specifically described. However, the inventive method for producing a negative electrode body is not limited to the example described below.

First, the film containing the silicon and/or the silicon monoxide and having the multilayer structure composed of two or more layers is produced. Here, the film containing the silicon and/or the silicon monoxide and having the multilayer structure is vapor-deposited on the negative electrode current collector. The film containing the silicon can include silicon particles. The film containing the silicon monoxide can contain silicon monoxide particles, that is the silicon compound (silicon oxide) particles containing the oxygen. Consequently, the film containing the silicon and/or the silicon monoxide and having the multilayer structure composed of two or more layers can contain silicon-containing particles.

The film containing the silicon and/or the silicon monoxide and having the multilayer structure can be formed by depositing, e.g., a silicon vapor flow or a silicon oxide gas on the negative electrode current collector having the roughened surface, for example, a roughened foil (e.g., roughened copper foil) having a ten-point mean roughness Rz of the surface of 1.5 µm or more and 5.0 µm or less (for example, 2.5 µm). In the inventive method for producing a negative electrode body, the negative electrode current collector is wound onto the can roll having a curvature. The curvature (R) of the can roll is preferably, for example, 4 m⁻¹ or more and 20 m⁻¹ or less.

A specific example of the method for forming the film containing the silicon and/or the silicon monoxide and having the multilayer structure will be described below.

The silicon monoxide film can be formed, for example, by the following procedure. First, a raw material that generates the silicon oxide gas is heated at a temperature of 1100°C or higher under reduced pressure, thereby generating the silicon oxide gas. At this time, as the raw material, a mixture of metal silicon powder and silicon dioxide powder can be used. When the presence of oxygen on a surface of the metal silicon powder and trace amounts of oxygen in a reaction furnace are considered, it is preferable that the molar mixing ratio satisfies a range of 0.9<metal silicon powder/silicon dioxide powder<1.2.

Alternatively, the silicon oxide can also be formed by performing vapor deposition using the metal silicon and introducing oxygen gas to the deposited silicon. However, in this case, valence is uncontrollable, and as a result, the silicon separates into a composite in a zero-valent state and a tetravalent compound state. Similarly, it is possible to introduce a reducing gas (hydrogen) into silicon dioxide gas. However, due to the high velocity of the vapor, approaching sonic speed, it is difficult to introduce a sufficient amount of hydrogen gas. Consequently, in the inventive method for producing a negative electrode body, the raw materials for the silicon monoxide film are preferably the metal silicon powder and the silicon dioxide powder.

The silicon oxide gas generated as described above is deposited on the roughened portion of the surface of the negative electrode current collector, thereby forming the primary particles having a columnar structure.

Alternatively, the silicon film can be formed by vapor depositing using, e.g., the metal silicon.

When forming the silicon film and/or the silicon monoxide film, the structure of the primary particles can also be changed by modifying the roughened structure of the surface on the negative electrode current collector.

Heat of solidification during the deposition, or radiative heat from a heating unit promotes crystallization of the negative electrode active material layer. Therefore, in the inventive method for producing the negative electrode body, the negative electrode current collector is conveyed on the can roll having a curvature, allowing vapor-phase growth to be performed while preventing crystallization of Si and suppressing thermal load.

In particular, the silicon oxide, unlike the silicon, exhibits sublimability, enabling early-stage deposition. Moreover, a concern regarding radiant heat received from molten silicon, which is a problem in the silicon film formation, is absent, and thus, the silicon oxide is considered to be well-suited for forming the active material by the vapor deposition.

In the method for producing a negative electrode of the present invention, multilayer film formation (e.g., reciprocating multilayer film formation) is performed while conveying the negative electrode current collector on the can roll having the curvature. As a result, a portion of the surface of each layer is deposited at an oblique angle, thereby forming voids.

The vapor deposition can be performed on both roughened surfaces of the negative electrode current collector. For example, the vapor deposition can first be performed on one roughened surface of the negative electrode current collector, then the negative electrode current collector is flipped, and the vapor deposition can then be performed on another roughened surface of the negative electrode current collector.

The film containing the silicon and/or the silicon monoxide formed as above is sprayed with the oxygen-containing gas to form the multilayer-structured layer containing the silicon dioxide on the upper portion of each layer.

The oxygen-containing gas is not particularly limited to as long as the gas contains oxygen, for example, the gas can be nitrogen gas containing oxygen.

By spraying the gas containing the oxygen, the oxygen penetrates the voids at the upper portion of each layer, thereby enabling oxygen introduction into each layer. As a result, at the upper portion of each layer, at least a part of the silicon and/or the silicon oxide can be converted into the silicon dioxide. That is, by spraying the gas containing the oxygen, it is possible to form the layers of the multilayer structure in which each layer contains the silicon oxide, including the silicon dioxide.

Next, Li is doped (inserted) into the layers having the multilayer structure that includes the silicon dioxide at the upper portion of each layer produced as described above. As a result, the negative electrode active material layer is obtained, which includes the negative electrode active material particles including the silicon oxide particles into which the lithium is inserted. That is, through this process, the silicon oxide particles are modified, and the Li compound is generated in the silicon oxide particles.

### [Modification using Electrochemical Method]

In the modification using the electrochemical method, the negative electrode active material layer, including the silicon oxide particles, is immersed in a liquid non-aqueous electrolyte (electrolytic solution), with the negative electrode active material layer serving as the anode and lithium metal serving as a cathode. By supplying an electric current, lithium can be inserted into the active material layer. The electrolytic solution contains an electrolyte salt dissolved in a solvent and may further include additives or other materials.

The solvent to be used can be, for example, a non-aqueous solvent. Examples of the non-aqueous solvents include ethylene carbonate, propylene carbonate, butylene carbonate, dimethyl carbonate, diethyl carbonate, ethylmethyl carbonate, methylpropyl carbonate, 1,2-dimethoxyethane, tetrahydrofuran, etc. Among these, at least one or more ethylene carbonate, propylene carbonate, dimethyl carbonate, diethyl carbonate, or ethylmethyl carbonate are desirably used because such solvents enable better characteristics. In this case, superior characteristics can be obtained by combined use of a high-viscosity solvent, such as ethylene carbonate or propylene carbonate, and a low-viscosity solvent, such as dimethyl carbonate, ethylmethyl carbonate, or diethyl carbonate. This is because the dissociation of electrolyte salt and ionic mobility are improved.

In particular, the solvent desirably contains at least any one of the halogenated chain carbonate ester or halogenated cyclic carbonate ester. Thus, a stable coating is formed on the negative electrode active material surface to be formed with a stable coating at charge-and-discharge, particularly during charge. The halogenated chain carbonate ester is a chain carbonate ester having halogen as a constituent element (at least one hydrogen is substituted by halogen). In addition, the halogenated cyclic carbonate ester is cyclic carbonate ester having halogen as a constituent element (that is, at least one hydrogen is substituted by halogen).

The halogen type is preferable, but not limited to fluorine, for fluorine enables the formation of a better coating than other halogens. A larger number of halogens is better, for a more stable coating is obtained, and a decomposition reaction of an electrolyte liquid is suppressed.

Examples of the halogenated chain carbonate ester include fluoromethyl methyl carbonate and difluoromethyl methyl carbonate. Examples of the halogenated cyclic carbonate ester include 4-fluoro-1,3-dioxolane-2-one and 4,5-difluoro-1,3-dioxolane-2-one.

The solvent additive preferably contains an unsaturated carbon bond cyclic carbonate ester, which enables the formation of a stable coating on the surface of the negative electrode active material at charge-and-discharge and inhibits a decomposition reaction of the electrolyte liquid. Examples of the unsaturated carbon bond cyclic carbonate ester include vinylene carbonate and vinyl ethylene carbonate.

In addition, the solvent additive preferably contains sultone (cyclic sulfonic acid ester) because this improves chemical stability of a battery. Examples of the sultone include propane sultone and propene sultone.

In addition, the solvent preferably contains acid anhydride because this improves chemical stability of the electrolytic solution. An example of the acid anhydride includes propane disulfonic acid anhydride.

The electrolyte salt can contain, for example, any one or more light metal salts, such as lithium salt. Examples of the lithium salt can include lithium hexafluorophosphate (LiPF₆), lithium tetrafluoroborate (LiBF₄), etc.

The content of the electrolyte salt relative to the solvent is preferably 0.5 mol/kg or more and 2.5 mol/kg or less. This is because high ionic conductivity is obtained.

After insertion of the lithium, the lithium can be extracted by supplying an electric current using the negative electrode active material layer, including the silicon oxide particles as the cathode, and the lithium metal as the anode. At this time, the state of a coating for filling (composite compound) can be controlled by adjusting the temperature of the solvent, the type and concentration of the polyphenylene compound or polycyclic aromatic to be contained in the solvent, and the concentration of the polycyclic aromatic that forms a complex with Li. The obtained silicon active material particles may be subjected to heat treatment in an inert gas atmosphere. The lithium compound can be stabilized through heat treatment.

The composite compound thus formed can also include a plurality of types of compounds.

### [Formation of Coating having Lithium-ion Conductivity]

A coating (ion-conductive layer) having lithium-ion conductivity is formed on the negative electrode active material layer obtained by modification using the electrochemical method. By spraying carbon dioxide gas onto the negative electrode active material layer, a lithium carbonate coating can be formed on the surface and between the negative electrode active material layers. Moreover, the coating can be formed by adding aluminum phosphate to the electrolytic solution during the lithium insertion and extraction. By not removing the electrolyte salt after the lithium insertion and extraction, a coating composed of Li₃PO₄, LiF, and Li₂CO₃ can be formed on the surface.

The compound having a silyl group is preferably formed by alkylsilazane treatment. In this way, the treatment takes place on the material surface, thereby enabling an efficient formation of the layer containing the compound having a silyl group. More specifically, the layer containing the compound having a silyl group can be formed by the following procedure, for example. Note that an OH group is present on the surfaces of the negative electrode active material layer. The OH group reacts with an alkylsilazane decomposition product, thereby presumably introducing the trialkylsilyl group to the surfaces of the silicon compound particle and the carbon material.

First, dehydrated toluene, the negative electrode active material in an amount of a quarter of the mass of the dehydrated toluene, and HMDS (hexamethyldisilazane) equivalent to 3 mass% of the negative electrode active material are introduced into a vessel and then left standing for one hour. Subsequently, the negative electrode active material layer is dried to form a coating composed of the compound having the silyl group.

The carbonized material in which the main component is the aromatic compound (polycyclic aromatic hydrocarbon) is preferably formed by a coal tar pitch treatment. Specifically, the coating can be formed by applying the coal tar or the pitch to the negative electrode active material layer, and subjecting thereof to heat treatment. The coal tar or the pitch is thermally decomposed to form the carbonized material, which is the aromatic compound (polycyclic aromatic hydrocarbon), thereby forming the coating on the negative electrode active material layer. A temperature for thermal composition is not particularly limited.

### [Forming of Solid Electrolyte Layer]

After forming the ion-conductive layer, the solid electrolyte layer contiguous to the ion-conductive layer is formed. This step can be performed by disposing of the solid electrolyte layer contiguous to the ion-conductive layer and then applying pressure thereto, or the like.

In the way described above, the inventive negative electrode body can be produced.

### <Lithium-ion Secondary Battery>

The inventive negative electrode body can be used as a negative electrode body for an all-solid-state battery, such as a lithium-ion secondary battery.

Next, an example of an all-solid-state battery in which the inventive negative electrode body can be used will be described.

A configuration of the lithium secondary battery is not particularly limited, and an example thereof is shown in FIG. 2. FIG. 2 is an explanatory view showing one example of the configuration of an all-solid-state-type lithium secondary battery 20. This all-solid-state-type lithium secondary battery includes the solid electrolyte layer 16 as described above, a positive electrode active material layer 21 formed on one surface of the solid electrolyte layer 16 and having positive electrode active material that occlude and release lithium, and the negative electrode active material layer 12 formed on the other side of the solid electrolyte layer 16 and having the negative electrode active material that occlude and release lithium. A positive electrode current collector 22 is formed on a surface of the positive electrode active material layer 21, and the negative electrode current collector 11 is formed on the surface of the negative electrode active material layer 12. The solid electrolyte layer 16 and the negative electrode active material layer 12 may also be configured as a composite to constitute the negative electrode body 10.

### EXAMPLE

Hereinafter, the present invention will be specifically described with reference to Examples and Comparative Examples. However, the present invention is not limited thereto.

### (Comparative Example 1)

In order to use as a reference for Examples, a coated active material in a particle shape as described below was first produced.

### (Producing Negative Electrode Structure)

A coated active material was produced using a particle composing machine (NOB-MINI manufactured by HOSOKAWA MICRON CORPORATION). First, a negative electrode active material (Li-doped SiO powder coated with carbon (denoted as "Li-SiO-C")), a sulfide solid electrolyte (10LiI-15LiBr-75(0.75Li2S-0.25P2S5), average particle diameter of 0.5 µm), and a conductive assistant agent (spherical carbon, specific surface area of 93 m2/g) were introduced into a processing vessel of the machine in a proportion shown in Table 1 below, such that a total amount of materials was adjusted to 30 g. Next, a compression shear processing was performed under the following conditions: a gap between rotating blades (blades) of a compression shear rotor and an inner wall of the processing vessel was set to 1 mm; a pressure of 100 Pa; a peripheral blade speed of 26.4 m/s; and a processing time of 12.5 minutes. As a result, the coated active material was obtained.

Li-Si-O was prepared by the following procedure. First, a SiO block was produced by mixing silicon and silicon dioxide as raw materials, vaporizing the mixture at 1300° C., depositing on a substrate for deposition, and quenching. The SiO block was pulverized to a median diameter of 7 µm and then Li-doped by using a redox method. After doping, a sample was subjected to heat treatment to stabilize Li silicate.

The obtained active material, the sulfide solid electrolyte (10LiI-15LiBr-75(0.75Li2S-0.25P2S5), average particle diameter of 0.5 µm), a conductive assistant agent (VGCF), and a binder (PVdF) were provided. These components were weighed to achieve a weight ratio of negative electrode active material : sulfide solid electrolyte : conductive assistant agent : binder = 53:41:4:2 and mixed with a dispersion medium (heptane). The resulting mixture was dispersed using an ultrasonic homogenizer (UH-50 manufactured by SMT Co.,Ltd.), thereby obtaining a negative electrode slurry.

The obtained negative electrode slurry was applied onto a negative electrode current collector (copper foil) and dried under the conditions of 100°C for 30 minutes. Subsequently, by punching the dried product into a size of 1 cm², a negative electrode structure having a negative electrode layer and the negative electrode current collector was obtained. The sulfide solid electrolyte (10LiI-15LiBr-75(0.75Li₂S-0.25P₂S₅), average particle diameter of 0.5 µm) was introduced into a tubular plastic having an inner cross-sectional area of 1 cm² and pressed at 4 ton/cm² to obtain a solid electrolyte layer (thickness of 15 µm). The obtained solid electrolyte layer and the negative electrode structure were arranged and pressed together at 4 ton/cm². The negative electrode layer had a thickness of 46 µm.

### (Producing Positive Electrode Structure)

A positive electrode active material (LiNi_{1/3}Co_{1/3}Mn_{1/3}O₂), the sulfide solid electrolyte (10LiI-15LiBr-75(0.75Li2S-0.25P₂S₅), average particle diameter of 0.5um), the conductive assistant agent (VGCF), and the binder (PVdF) were provided. These components were weighed to achieve a weight ratio of positive electrode active material : sulfide solid electrolyte : conductive assistant agent : binder = 85:13:1:1, and mixed with the dispersion medium (heptane). The resulting mixture was dispersed using the ultrasonic homogenizer (UH-50 manufactured by SMT Co.,Ltd.), thereby obtaining a positive electrode slurry.

The obtained positive electrode slurry was applied onto a positive electrode current collector (aluminum foil) and dried under the conditions of 100°C for 30 minutes. Subsequently, by punching the dried product into a size of 1 cm², a positive electrode structure having a positive electrode layer and the positive electrode current collector was obtained. The positive electrode layer had a thickness of 50 µm.

### (Producing Battery for Evaluation)

The positive electrode structure and the negative electrode structure were arranged and pressed together at 4 ton/cm². Subsequently, stainless steel rods were inserted on both the positive electrode side and the negative electrode side, respectively, and the assembly was constrained at 5 MPa to obtain an all-solid-state battery (battery for evaluation).

### (Comparative Example 2)

A negative electrode body for an electrode in Comparative Example 2 was produced with the following procedure. As for a negative electrode current collector, a surface roughened copper foil in which a ten-point mean roughness (roughness) Rz of the surface was 2.5 µm was used.

### [Producing Negative Electrode Active Material Layer]

A gravelly metallic silicon was placed in a carbon crucible, and silicon was melted and vaporized by using an electron gun under a vacuum. Using an apparatus capable of conveying, the surface roughened copper foil, to be a negative electrode current collector, was placed on a roll, then silicon films of five layers were formed on the surface roughened copper foil while running the roll.

### [Inserting and Extracting of Lithium]

Ethylene carbonate (EC) and dimethyl carbonate (DMC) were mixed to prepare a non-aqueous solvent, followed by dissolving an electrolyte salt (lithium hexafluorophosphate: LiPF₆) into this non-aqueous solvent to prepare the electrolyte solution (non-aqueous electrolyte). In this case, the solvent composition was set to EC:DMC = 30:70 in a volume ratio, and the content of the electrolyte salt was set to 1 mol/kg relative to the solvent. The obtained negative electrode active material layer was modified by inserting and extracting lithium into and from silicon compound particles using this electrolytic solution by an electrochemical method. Lithium insertion was completed when a potential difference between an anode and a cathode reached zero volts. Lithium extraction was completed when the potential difference between the anode and the cathode reached 1.2 V. The negative electrode active material layer, obtained after the completion of lithium extraction, was cleaned with a dimethyl carbonate non-aqueous solvent to remove the electrolyte salt.

### [Forming Surface Coating (Ion-conductive Layer)]

A lithium carbonate coating (ion-conductive layer) was formed on a surface and an interlayer (space between layers of a multilayer structure) of the negative electrode active material layer obtained by modification using the electrochemical method, by spraying carbon dioxide gas onto the layer.

The obtained negative electrode structure and the solid electrolyte layer were arranged contiguously, and pressed thereto at 4 ton/cm² to obtain a negative electrode body.

### (Comparative Example 3)

In Comparative Example 3, metallic silicon and silicon dioxide were placed in a carbon crucible and heated at 1200°C under a vacuum atmosphere of 10⁻² Pa to generate vapor. The resulting vapor was directly deposited onto a roughened copper foil, in the same way as Comparative Example 2, to form five layers.

In Comparative Example 3 as described, the roughened copper foil, a negative electrode active material layer containing silicon oxide provided on the roughened copper foil, and a solid electrolyte layer were arranged contiguously and pressed thereto at 4 ton/cm² to obtain a negative electrode body.

### (Comparative Examples 4 and 5, and Example 1)

In Comparative Examples 4 and 5, and Example 1, negative electrode bodies were produced in the same way as in Comparative Example 2, except that water vapor was introduced in a silicon vapor stream during film formation in an attempt to forcibly oxidize the silicon.

### (Example 2)

In Example 2, a roughened copper foil obtained in the same way as in Comparative Example 3, and a negative electrode active material layer containing silicon oxide provided on this roughened copper foil were subjected to lithium insertion and extraction, as well as formation of a surface coating (ion-conductive layer) in the same way as in Comparative Example 2. An obtained negative electrode structure and a solid electrolyte layer were arranged contiguously and pressed at 4 ton/cm² to obtain a negative electrode body.

### (Comparative Example 6)

In Comparative Example 6, a negative electrode body was produced in the same way as in Example 2, except that a surface coating (ion-conductive layer) was not formed.

### (Examples 3 and 4, and Comparative Example 7)

In Examples 3 and 4, and Comparative Example 7, negative electrode bodies were produced in the same way as in Example 2, except that film formation was performed by adjusting a formation rate such that a value "x1" in SiOₓ₁Li_{y1} of negative electrode active material particles matched values shown in Table 1, and introducing hydrogen or oxygen into a vapor as needed.

### (Examples 5 and 6)

In Examples 5 and 6, each negative electrode body was produced in the same way as in Example 2, except that one layer and 20 layers were formed, respectively, in forming a negative electrode active material layer by controlling a formation rate.

### (Example 7)

In Example 7, a negative electrode body was produced in the same way as in Example 2, except that roughness Rz on a surface roughened copper foil was set to 0.5.

### (Examples 8 to 10)

In Examples 8 to 10, each negative electrode body was produced in the same way as in Example 2, except that a thickness before charging a battery (T1) and a thickness when fully charged (T2) were adjusted to vary by changing a depth of discharge during the lithium insertion. The depth of discharge was defined by an amount of lithium insertion, with 0% before charging and 100% when a potential difference between an anode and a cathode reaches zero.

### (Examples 11 to 14)

In Example 11, a negative electrode body was produced in the same way as in Example 2, except that aluminum phosphate was added to an electrolytic solution during lithium insertion and extraction, and carbon dioxide gas was not sprayed. In Example 12, a negative electrode body having a negative electrode active material layer in which a coating (ion-conductive layer) composed of Li₃PO₄, LiF, and Li₂CO₃ was present on a surface was produced in the same way as in Example 2, except that a removal of an electrolyte salt was not performed after lithium insertion and extraction. In Example 13, a negative electrode body was produced in the same way as in Example 2, except that a negative electrode active material layer, which was obtained after lithium insertion and extraction, was subjected to alkylsilazane treatment. In Example 14, a negative electrode body was produced in the same way as in Example 2, except that the negative electrode active material layer obtained after lithium insertion and extraction was cleaned with a dimethyl carbonate non-aqueous solvent containing 3 vol% tar to remove an electrolyte salt, and then subjected to heat treatment.

### (Example 15)

In Example 15, a negative electrode body was produced in the same way as in Example 2, except that a lithium carbonate coating (ion-conductive layer) was formed only on a surface of a negative electrode active material layer. This obtained layer was modified using an electrochemical method, in which carbon dioxide gas was diluted to a concentration of 1.0 vol% by mixing with Ar, and then sprayed onto the layer.

### (Examples 16 to 18)

In Examples 16 to 18, a negative electrode body was produced in the same way as in Example 2, except that an average number of primary particles in secondary particles was adjusted by setting roughness Rz on a surface roughened copper foil to 1.0, 1.5, and 2.5, respectively.

### (Example 19)

In Example 19, a negative electrode body was produced in the same way as in Example 2, except that a solid electrolyte layer disposed contiguous to an ion-conductive layer disposed on an outermost surface of a negative electrode active material was changed to Li_{0.5}La_{0.5}Mg_{0.5}W_{0.5}O₃, which was a compound having a perovskite structure.

### [Preparing Compound having Perovskite Structure]

Li₂CO₃ (manufactured by Kojundo Chemical Laboratory Co.,Ltd.), La(OH)₃ (manufactured by Kojundo Chemical Laboratory Co.,Ltd.), MgO (manufactured by Kojundo Chemical Laboratory Co.,Ltd.), and WO₃ (manufactured by Kojundo Chemical Laboratory Co.,Ltd.) were weighed such that a basic compositional formula was provided by Li_{0.5}La_{0.5}Mg_{0.5}W_{0.5}O₃. Next, a ball mill pot made of ZrO₂, and beads (3 mmf) were provided, the weighed powders were introduced therein, and ethanol was added as a solvent. A milling treatment was performed at 300 rpm for 3 minutes, followed by 2-minute rests, and this process was repeated 20 times. Contents in the ball mill were transferred into a vat made of SUS (stainless steel), and dried in a dryer at 90°C for 2 hours. The powders were collected by passing through a sieve (#500 mesh). Next, the obtained powders were placed in an alumina crucible, heated at 900°C for 10 hours in air, and subjected to the above milling treatment. Subsequently, the obtained powders were subjected to a pressure of 10 MPa using a molding machine and formed into a pellet-shaped compacted body. This compacted body was sintered under conditions of 1100°C for 12 hours.

### (Example 20)

In Example 20, a negative electrode body was produced in the same way as in Example 2, except that a solid electrolyte layer disposed contiguous to an ion-conductive layer present on an outermost surface of a negative electrode active material was changed to Li₃In₂(PO₄)₃, which was a NASICON-type phosphate compound.

### [Producing NASICON-type Phosphate Compound]

An intermediate was provided by using In as an In-containing active material and a glassy Li_{1.5}Al_{0.5}Ge_{1.5}(PO₄)₃ (LAGP) as an amorphous phosphate compound, such that In and LAGP were brought into contact with each other. Next, the intermediate was calcined at a predetermined temperature to cause a reaction between In and LAGP, thereby obtaining a sintered body for a battery containing an active material having a crystalline phase of Li₃In₂(PO₄)₃.

### (Example 21)

In Example 21, a negative electrode body was produced in the same way as in Example 2, except that a solid electrolyte layer disposed contiguous to an ion-conductive layer present on an outermost surface of a negative electrode active material was changed to Li_{6.8}(La_{2.95}Ca_{0.05})(Zr_{1.75}Nb_{0.25})O₁₂ (LLZ-CN), which was a compound having a garnet-type crystal structure.

### [Producing Compound having Garnet-type Crystal Structure]

LiOH(H₂O), La(OH)₃, Ca(OH)₂, ZrO₂, and Nb₂O₅ were used for starting materials. The starting materials were weighed to attain a stoichiometric proportion, then mixed and pulverized. The mixing and pulverization were performed in ethanol using a zirconia ball in a planetary ball mill (300 rpm) for 1 hour. Thereafter, the powder was subjected to pre-calcination (700°C, 48 h). After the pre-calcination, LiOH(H₂O) was added to the powder in excess to attain 10 at% with respect to the Li content of a composition to compensate for the Li loss during sintering. Then, the powder was again mixed and pulverized under the same conditions and then subjected to a pre-calcination (700°C, 10 h). The powder, which has been subjected to the above precalcinations twice, was analyzed by XRD to identify a crystalline phase, and it was confirmed that unreacted starting materials were absent. Subsequently, Li and H were exchanged by immersing the LLZ-CN powder in water. Conditions for the immersion were a proportion of 50 mg of water with respect to 4g of LLZ-CN, and the mixture was left standing at room temperature (approximately 25°C) for 30 minutes, thereby exchanging Li and H. When the composition of the powder in which Li and H had been exchanged was analyzed, the result was (Li_{5.6},H_{1.2})(La_{2.95},Ca_{0.05})(Zr_{1.75},Nb_{0.25})O₁₂ (hereinafter, referred to as LLZ-HCN). Here, an amount of H in LLZ-HCN was identified as follows. First, the powder in which H had been substituted was subjected to TG·DTA-MASS measurement, a temperature range over which H₂O (molecular weight 18) was evaporated from the sample was determined by the MASS measurement, and a weight reduction amount in the temperature range was quantified by Tg. An atomic weight of the H amount contained in LLZ-HCN was calculated from a mass and molecular weight of LLZ-CN and from the mass and molecular weight of the evaporated water.

### [Evaluation of Discharge Capacity and Cycle characteristics]

A produced battery for evaluation was subjected to repeated CC charge-and-discharge in a constant-temperature chamber at 25°C with a discharge cutoff voltage of 2.0 V (vs. Li/Li⁺), a charge cutoff voltage of 4.8 V (vs. Li/Li⁺), and a current density of 0.1 C. A discharge capacity at an initial cycle was defined as a reference (100%), and a retention rate (%) of a discharge capacity after 100 cycles was determined.

**[Table 1]**

| | Compound containing Lithium, Silicon, and Oxygen | Ion-Conductive Layer on Surface | "x1" in SiOₓ₁Li_{y1} | "y1" in SiOₓ₁Li_{y1} | Capacity Retention Rate (%) after 100 Cycles | Discharge Capacity (mAh/ g) |
|---|---|---|---|---|---|---|
| Comparative Example 1 | Present (Li-SiO-C Powder) | - | 1 | 0.7 | 92 | 184 |
| Comparative Example 2 | Compound of Si and Li | Li₂CO₃ | 0.1 | - | 41 | 150 |
| Comparative Example 3 | Compound of Si and O | Li₂CO₃ | 1 | 0 | 33 | 124 |
| Comparative Example 4 | Present | Li₂CO₃ | 0.7 | 1.6 | 84 | 210 |
| Comparative Example 5 | Present | Li₂CO₃ | 0.8 | 1.6 | 80 | 230 |
| Example 1 | Present | Li₂CO₃ | 0.9 | 1.6 | 87 | 265 |
| Example 2 | Present | Li₂CO₃ | 1 | 1.6 | 98 | 283 |
| Comparative Example 6 | Present | Absent | 1 | 1.6 | 73 | 195 |
| Example 3 | Present | Li₂CO₃ | 1.1 | 1.6 | 85 | 245 |
| Example 4 | Present | Li₂CO₃ | 1.2 | 1.6 | 89 | 240 |
| Comparative Example 7 | Present | Li₂CO₃ | 1.3 | 1.6 | 83 | 195 |

**[Table 2]**

| | Principle features | Capacity Retention Rate (%) after 100 Cycles | Discharge Capacity (mAh/ g) |
|---|---|---|---|
| Example 5 | Negative electrode active material layer: 1 layer | 83 | 295 |
| Example 6 | Negative electrode active material layer: 20 layers | 96 | 240 |
| Example 7 | Secondary particle group: none | 83 | 240 |
| Example 8 | T2/T1=1.3 | 94 | 275 |
| Example 9 | T2/T1=1.4 | 88 | 270 |
| Example 10 | T2/T1=1.5 | 81 | 268 |
| Example 11 | Ion-conductive layer AlPO4 | 98 | 266 |
| Example 12 | Ion-conductive layer Li3PO4,LiF,and Li3CO3 | 96 | 253 |
| Example 13 | Alkylsilazane treatment | 95 | 241 |
| Example 14 | Coal tar pitch treatment | 97 | 249 |
| Example 15 | Interlayer ion-conductive layer: none | 95 | 240 |
| Example 16 | Number of primary particles within each secondary particle: 3 | 85 | 256 |
| Example 17 | Number of primary particles within each secondary particle: 4 | 90 | 264 |
| Example 18 | Number of primary particles within each secondary particle: 6 | 95 | 262 |
| Example 19 | Compound having perovskite structure | 97 | 275 |
| Example 20 | NASICON-type phosphate compound | 94 | 279 |
| Example 21 | Compound having garnet-type crystal structure | 96 | 284 |

### [Result ]

Tables 1 and 2 above show the results of the capacity retention rate after 100 cycles and the discharge capacity.

As is apparent from Tables 1 and 2, it is found that the negative electrode bodies in Examples 1 to 21 each can exhibit the battery characteristics of the discharge capacity of 240 mAh/g while maintaining the capacity retention rate of 80% after 100 cycles.

On the other hand, the negative electrode body in Comparative Example 1, produced from Li-SiO powder, exhibited a lower discharge capacity than those of the negative electrode bodies in Examples 1 to 20. This is considered due to the fact that the negative electrode body in Comparative Example 1 contained the binder that did not participate in charge-and-discharge because the employing powder was used instead of performing vapor deposition, and further, a large number of excessive voids were present.

Moreover, the negative electrode body in Comparative Example 2 exhibits significantly lower cycle characteristics compared with those of Examples 1 to 21.

Comparative Example 3 exhibited significantly lower cycle characteristics and discharge capacity compared with Examples 1 to 21. This is considered to be due to the fact that Li insertion into the silicon oxide was not performed.

The silicon oxide is generated from the silicon and the silicon dioxide, resulting in difficulty in varying the oxygen content. In fact, the silicon oxide (Comparative Example 4) in which "x1" was set to 0.7 in SiOₓ₁Li_{y1} was unable to control valence thereof, resulting in a composition that retained a substantial amount of silicon content.

In order to realize an even lower oxygen content, it is required not only to introduce hydrogen into the vapor to actively reduce the oxygen, but also to significantly lower the deposition rate.

The negative electrode bodies in Comparative Examples 4 and 5 had a lower discharge capacity compared with the negative electrodes in Examples 1 and 2, as a result of setting "x1" in SiOₓ₁Li_{y1} to 0.7 and 0.8, respectively. This is considered to be due to the fact that, in the negative electrode bodies in Comparative Examples 4 and 5, by setting "x1" in SiOₓ₁Li_{y1} to 0.7 and 0.8, an area where 0-valent Si was reacted with the electrolyte was expanded excessively, leading to breakdown of a conductive pathway during the discharge.

On the other hand, when increasing the oxygen content, the deposition rate was also lowered, and the oxygen was directly injected into a vapor flow to form. However, as the oxygen content increased, it became difficult to prepare a silicon oxide film.

The negative electrode body in Comparative Example 7 exhibited lower discharge capacity compared with the negative electrode bodies in Examples 1 to 4, as a result of setting "x1" in SiOₓ₁Li_{y1} to 1.3. This is considered to be caused by excessive loading material in the negative electrode body in Comparative Example 7 due to setting "x1" in SiOₓ₁Li_{y1} to 1.3. A tendency is observed in which the discharge capacity is lowered as "x" is increased; therefore, "x1" is preferably set to 1.2 or lower.

The negative electrode body in Comparative Example 6 exhibited a lower discharge capacity due to the absence of the ion-conductive layer on the outermost surface of the negative electrode active material layer. This is considered to be caused by an increase in interfacial resistance with the solid electrolyte in the negative electrode body in Comparative Example 6 by the absence of the ion-conductive layer on the outermost surface of the negative electrode active material layer.

When the negative electrode bodies in Examples 1 to 4 are compared with those in Comparative Examples 4 and 5, "x1" in SiOₓ₁Li_{y1} being set between 0.9 to 1.2 results in a suppression of an irreversible component of the negative electrode body, as well as an improvement in both an initial efficiency and cycle characteristics.

In Example 5, the discharge capacity is improved because the interfacial resistance is decreased as the negative electrode active material layer becomes a single-layer film. However, the capacity retention rate is decreased because the expansion and contraction during charge-and-discharge become difficult to mitigate. A negative electrode body having a multilayer structure, such as those in Examples 2 and 6, is more preferable because the expansion and contraction of the negative electrode active material layer in the negative electrode body can be mitigated, thereby enabling the improvement of the capacity retention rate.

When Example 7 is compared with Example 2, it is considered that the capacity retention rate is decreased because the secondary particles are not formed, leading to a structure that is difficult to mitigate the expansion and contraction of the negative electrode active material layer in the negative electrode body. It is preferable that the secondary particles are formed as in Example 2.

Examples 8 to 10 are the examples aimed at groping an optimal point where a thickness (T1) of the negative electrode active material before charging and a thickness (T2) after fully charging are suitable.

The smaller the value T2/T1, the more the expansion and contraction during charge-and-discharge are suppressed, which is expected to improve the capacity retention rate.

A presence of the coating (ion-conductive layer), shown in Examples 3, 11 to 14, on the outermost surface of the negative electrode active material layer is considered to suppress reaction with moisture and oxygen, thereby enabling prevention of degradation of the material as well as maintenance of the excellent battery characteristics. Therefore, it is preferable to have such a coating (ion-conductive layer).

The negative electrode body in Example 15 exhibits reduced discharge capacity compared with that in Example 3 due to the absence of the ion-conductive layer between the negative electrode active material layers. Consequently, it is considered that the negative electrode body, in which the ion-conductive layer is present between the negative electrode active material layers, as in Example 3, can improve ionic conductivity and maintain excellent battery characteristics. Therefore, it is preferable to have the ion-conductive layer between the negative electrode active material layers.

Examples 16 to 18 are the examples aimed at groping for an optimal point where the number of primary particles in the secondary particles is suitable. It is considered that the higher number of primary particles in the secondary particles can mitigate the stress caused by expansion during charge-and-discharge, thereby enabling the improvement of the capacity retention rate.

Examples 19 to 21 are the examples aimed at groping for the type of solid electrolyte contiguous to the ion-conductive layer. The negative electrode active materials in Examples 19 to 21 can exhibit excellent battery characteristics as the negative electrode when combined with any solid electrolyte.

The present description includes the following embodiments.
[1]: A negative electrode body comprising:
   a negative electrode including,
      a negative electrode current collector having a roughened surface,
      a negative electrode active material layer provided on the negative electrode current collector, and
      an ion-conductive layer having lithium-ion conductivity and disposed on a surface of the negative electrode active material layer; and
   a solid electrolyte layer disposed contiguous to the ion-conductive layer, wherein
   the negative electrode active material layer comprises negative electrode active material particles having a compound containing lithium, silicon, and oxygen,
   the negative electrode active material particles are represented by SiOₓ₁Li_{y1}, and
   a value of "x1" is more than 0.8 and 1.2 or less, and a value of "y1" is 0.5 or more and 3.4 or less.
[2]: The negative electrode body according to the above [1], wherein
   the negative electrode active material layer has a multilayer structure composed of two or more layers,
   when the negative electrode active material particles are defined as primary particles, the negative electrode active material layer forms secondary particles, which are aggregates of the primary particles,
   the secondary particles have a form separated from each other in an in-plane direction,
   a thickness T1 of the negative electrode active material layer before charging and a thickness T2 when fully charged satisfy a relation of T2/T1 ≤ 1.4.
[3]: The negative electrode body according to the above [2], wherein
   the negative electrode active material layer having the multilayer structure comprises an interlayer lithium-ion conductive layer having lithium-ion conductivity disposed in at least one of the interfaces between respective layers constituting the multilayer.
[4]: The negative electrode body according to any of the above [1] to [3], wherein
   the negative electrode active material layer contains at least one of Li₄SiO₄, Li₂Si₂O₅, Li₂SiO₃, and Li₆Si₂O₇.
[5]: The negative electrode body according to any of [1] to [4], wherein
   the ion-conductive layer having the lithium-ion conductivity is composed of at least one of Li carbonate, Li phosphate, Li fluoride, Al carbonate, Al phosphate, Al fluoride, a compound having a silyl group, and a carbonized material containing a polycyclic aromatic hydrocarbon.
[6]: The negative electrode body according to any of the above [2] to [5], wherein
   the secondary particles of the negative electrode active material layer are each composed of, on average, four or more primary particles.
[7]: The negative electrode body according to the above [1] to [6], wherein
   the solid electrolyte layer is composed of a sulfide-based solid electrolyte.
[8]: The negative electrode body according to the above [7], wherein
   the sulfide-based solid electrolyte includes at least one of lithium, indium, sulfur, and phosphorus.
[9]: The negative electrode body according to the above [7] or [8], wherein
   the sulfide-based solid electrolyte includes at least one of Li₂S, P₂S₅, SiS₂, LiI, LiBr, P₂O₅, Li₃PO₄, and GeS₂.
[10]: The negative electrode body according to the above [1] to [6], wherein
   the solid electrolyte layer is composed of an oxide-based solid electrolyte.
[11]: The negative electrode body according to the above [10], wherein
   the oxide-based solid electrolyte has a perovskite structure.
[12]: The negative electrode body according to the above [10] or [11], wherein
   the oxide-based solid electrolyte includes at least one of lanthanum, lithium, magnesium, tungsten, niobium, and titanium.
[13]: The negative electrode body according to any of the above [10] to [12], wherein
   the oxide-based solid electrolyte is represented by a compositional formula of Aₓ₂BO₃ (0<x2<1),
   the element A includes at least one of La and Li, and
   the element B includes at least one of Mg, W, Nb, and Ti.
[14]: The negative electrode body according to the above [10], wherein
   the oxide-based solid electrolyte includes a NASICON-type phosphate compound.
[15]: The negative electrode body according to the above [14], wherein
   the solid electrolyte having the NASICON-type phosphate compound includes at least one of lithium, aluminum, germanium, zirconium, titanium, and calcium.
[16]: The negative electrode body according to the above [14] or [15], wherein
   the NASICON-type phosphate compound is represented by Li₍₁₊ₓ₃₎M1₍ₓ₃₎M2₍₂₋ₓ₃₎(PO₄)₃,
   the element M1 includes at least one selected from the group consisting of Al, Y, Ga, and In,
   the element M2 includes at least one selected from the group consisting of Ti, Ge, and Zr, and
   "x3" satisfies 0≤x3≤2.
[17]: The negative electrode body according to the above [10], wherein
   the oxide-based solid electrolyte has a garnet-type crystal structure.
[18]: The negative electrode body according to the above [17], wherein
   the solid electrolyte having the garnet-type crystal structure includes at least one of lithium, lanthanum, calcium, zirconium, bismuth, aluminum, cerium, gallium, boron, and oxygen.
[19]: The negative electrode body according to the above [17] or [18], wherein
   the solid electrolyte having the garnet-type crystal structure is represented by Li_{(7-3x4+y4-z4)}Mₓ₄La_{(3-y4)}A'_{(y4)}Zr_{(2-z4)}T_{(z4)}O₁₂ (an element M is one or more of Al and Ga; an element A' is one of Ca and Sr; and T is one of Nb and Ta; satisfying 0≤x4≤0.18, 0≤y4≤0.18, and 0≤z4≤1.5).
[20]: A method for producing a negative electrode body to produce the negative electrode body according to any of the above [1] to [19], the method comprising the steps of:
   winding the negative electrode current collector onto a can roll having a curvature;
   vapor-depositing a film containing silicon and/or silicon monoxide and having a multilayer structure composed of two or more layers on the negative electrode current collector by the vapor deposition, while conveying the negative electrode current collector on the can roll;
   spraying an oxygen-containing gas onto the film containing silicon and/or silicon monoxide to form a multilayer-structured layer containing silicon dioxide on an upper portion of each layer;
   forming the negative electrode active material layer by inserting lithium into, and releasing from, the layers having the multilayer structure;
   forming the ion-conductive layer having lithium-ion conductivity on a surface of the negative electrode active material layer; and
   forming the solid electrolyte layer contiguous to the ion-conductive layer.
[21]: The method for producing a negative electrode body according to the above [20], wherein
   in the step of forming the layers having the multilayer structure, the layers having the multilayer structure are formed such that each layer contains silicon oxide, including the silicon dioxide therein,
   in the step of vapor-depositing, the negative electrode active material layer containing the silicon oxide is grown by vapor deposition on the negative electrode current collector, and
   the method comprises the step of immersing the negative electrode active material layer containing he silicon oxide in a lithium-containing solution, and modifying the silicon oxide by an electrochemical method to generate the compound containing lithium, silicon, and oxygen, and to form the ion-conductive layer.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A negative electrode body comprising:
a negative electrode including,
a negative electrode current collector having a roughened surface,
a negative electrode active material layer provided on the negative electrode current collector, and
an ion-conductive layer having lithium-ion conductivity and disposed on a surface of the negative electrode active material layer; and
a solid electrolyte layer disposed contiguous to the ion-conductive layer, wherein
the negative electrode active material layer comprises negative electrode active material particles having a compound containing lithium, silicon, and oxygen,
the negative electrode active material particles are represented by SiOₓ₁Li_{y1}, and
a value of "x1" is more than 0.8 and 1.2 or less, and a value of "y1" is 0.5 or more and 3.4 or less.

2. The negative electrode body according to claim 1, wherein
the negative electrode active material layer has a multilayer structure composed of two or more layers,
when the negative electrode active material particles are defined as primary particles, the negative electrode active material layer forms secondary particles, which are aggregates of the primary particles,
the secondary particles have a form separated from each other in an in-plane direction,
a thickness T1 of the negative electrode active material layer before charging and a thickness T2 when fully charged satisfy a relation of T2/T1 ≤ 1.4.

3. The negative electrode body according to claim 2, wherein
the negative electrode active material layer having the multilayer structure comprises an interlayer lithium-ion conductive layer having lithium-ion conductivity disposed in at least one of the interfaces between respective layers constituting the multilayer.

4. The negative electrode body according to claim 1, wherein
the negative electrode active material layer contains at least one of Li₄SiO₄, Li₂Si₂O₅, Li₂SiO₃, and Li₆Si₂O₇.

5. The negative electrode body according to claim 1, wherein
the ion-conductive layer having the lithium-ion conductivity is composed of at least one of Li carbonate, Li phosphate, Li fluoride, Al carbonate, Al phosphate, Al fluoride, a compound having a silyl group, and a carbonized material containing a polycyclic aromatic hydrocarbon.

6. The negative electrode body according to claim 2, wherein
the secondary particles of the negative electrode active material layer are each composed of, on average, four or more primary particles.

7. The negative electrode body according to claim 1, wherein
the solid electrolyte layer is composed of a sulfide-based solid electrolyte.

8. The negative electrode body according to claim 7, wherein
the sulfide-based solid electrolyte includes at least one of lithium, indium, sulfur, and phosphorus.

9. The negative electrode body according to claim 7, wherein
the sulfide-based solid electrolyte includes at least one of Li₂S, P₂S₅, SiS₂, LiI, LiBr, P₂O₅, Li₃PO₄, and GeS₂.

10. The negative electrode body according to claim 1, wherein
the solid electrolyte layer is composed of an oxide-based solid electrolyte.

11. The negative electrode body according to claim 10, wherein
the oxide-based solid electrolyte has a perovskite structure.

12. The negative electrode body according to claim 10, wherein
the oxide-based solid electrolyte includes at least one of lanthanum, lithium, magnesium, tungsten, niobium, and titanium.

13. The negative electrode body according to claim 10, wherein
the oxide-based solid electrolyte is represented by a compositional formula of Aₓ₂BO₃ (0<x2<1),
the element A includes at least one of La and Li, and
the element B includes at least one of Mg, W, Nb, and Ti.

14. The negative electrode body according to claim 10, wherein
the oxide-based solid electrolyte includes a NASICON-type phosphate compound.

15. The negative electrode body according to claim 14, wherein
the solid electrolyte having the NASICON-type phosphate compound includes at least one of lithium, aluminum, germanium, zirconium, titanium, and calcium.

16. The negative electrode body according to claim 14, wherein
the NASICON-type phosphate compound is represented by Li₍₁₊ₓ₃₎M1₍ₓ₃₎M2₍₂₋ₓ₃₎(PO₄)₃,
the element M1 includes at least one selected from the group consisting of Al, Y, Ga, and In,
the element M2 includes at least one selected from the group consisting of Ti, Ge, and Zr, and
"x3" satisfies 0≤x3≤2.

17. The negative electrode body according to claim 10, wherein
the oxide-based solid electrolyte has a garnet-type crystal structure.

18. The negative electrode body according to claim 17, wherein
the solid electrolyte having the garnet-type crystal structure includes at least one of lithium, lanthanum, calcium, zirconium, bismuth, aluminum, cerium, gallium, boron, and oxygen.

19. The negative electrode body according to claim 17, wherein
the solid electrolyte having the garnet-type crystal structure is represented by Li_{(7-3x 4+y4-z4)}Mₓ₄La_{(3-y4)}A'(_{(y4)}Zr_{(2-z4)}T_{(z4)}O₁₂ (an element M is one or more of Al and Ga; an element A' is one of Ca and Sr; and T is one of Nb and Ta; satisfying 0≤x4≤0.18, 0≤y4≤0.18, and 0≤z4≤1.5).

20. A method for producing a negative electrode body to produce the negative electrode body according to any one of claims 1 to 19, the method comprising the steps of:
winding the negative electrode current collector onto a can roll having a curvature;
vapor-depositing a film containing silicon and/or silicon monoxide and having a multilayer structure composed of two or more layers on the negative electrode current collector by the vapor deposition, while conveying the negative electrode current collector on the can roll;
spraying an oxygen-containing gas onto the film containing silicon and/or silicon monoxide to form a multilayer-structured layer containing silicon dioxide on an upper portion of each layer;
forming the negative electrode active material layer by inserting lithium into, and releasing from, the layers having the multilayer structure;
forming the ion-conductive layer having lithium-ion conductivity on a surface of the negative electrode active material layer; and
forming the solid electrolyte layer contiguous to the ion-conductive layer.

21. The method for producing a negative electrode body according to claim 20, wherein
in the step of forming the layers having the multilayer structure, the layers having the multilayer structure are formed such that each layer contains silicon oxide, including the silicon dioxide therein,
in the step of vapor-depositing, the negative electrode active material layer containing the silicon oxide is grown by vapor deposition on the negative electrode current collector, and
the method comprises the step of immersing the negative electrode active material layer containing the silicon oxide in a lithium-containing solution, and modifying the silicon oxide by an electrochemical method to generate the compound containing lithium, silicon, and oxygen, and to form the ion-conductive layer.
